# EUROPEAN PATENT APPLICATION

(11) **EP 4 650 737 A1**
(43) Date of publication of application: **19.11.2025**
(21) Application number: 25174970.1
(22) Date of filing: 08.05.2025
(51) Int. Cl.: G01L 1/18, G01L 9/06, G01L 9/00

(54) **PRESSURE DETECTION ELEMENT AND PRESSURE SENSOR**

(30) Priority: 14.05.2024 JP 2024078578
(71) Applicant: MITSUMI ELECTRIC CO., LTD., Tama-Shi, Tokyo 206-8567 (JP)
(72) Inventor: HARADA, Kazuya, TAMA-SHI, 206-8567 (JP)
(74) Representative: Regimbeau

(57) **Abstract**

A pressure detection element includes a semiconductor substrate that includes a diaphragm and a frame enclosing the diaphragm in a plan view; and a bridge circuit that includes a plurality of piezoresistors disposed over the diaphragm, a first metal interconnect configured to electrically connect adjacent piezoresistors of the piezoresistors, and a diffusion interconnect disposed between each of the piezoresistors and the first metal interconnect. The first metal interconnect is disposed in a remaining region excluding a first region in the semiconductor substrate. The first region is a region of a plurality of imaginary circles having a radius of a length that is 0.5 L1 or more and less than L1 from a center of each of the piezoresistors, where L1 denotes a shortest distance between each of the piezoresistors and an outer periphery of the frame in the plan view.

## Description

### TECHNICAL FIELD

The present disclosure relates to a pressure detection element and a pressure sensor.

### BACKGROUND ART

A pressure detection element configured to detect a pressure from a fluid based on a change in electrical resistance in a piezoresistor provided in a diaphragm of a semiconductor substrate is provided. Patent Literature 1 discloses a configuration including: a sensor chip formed of a semiconductor and including a diaphragm configured to be displaced by receiving a pressure; a plurality of strain gauges, such as piezoresistors, formed in the diaphragm; and a stress balance film configured to generate a pressure to balance a change in stress generated at respective positions of the plurality of strain gauges due to a change in temperature.

### CITATION LIST

### PATENT LITERATURE

Patent Literature 1: Japanese Patent Laid-Open Application Publication No. 1999-344402

### SUMMARY OF THE INVENTION

### TECHNICAL PROBLEM

A stress distribution in a semiconductor substrate changes in accordance with a layout of metal interconnects configured to electrically connect a plurality of piezoresistors. Also, a stress applied to the piezoresistors at an initial time, i.e., when no pressure is received from a fluid, can change in accordance with the change in the stress distribution in the semiconductor substrate. This can influence output characteristics of a pressure detection signal when the diaphragm of the semiconductor substrate is deflected by receiving a pressure from the fluid. In some cases, the stress balance film alone cannot sufficiently mitigate the impact of the pressure detection signal on output characteristics. Thus, it is required to further improve pressure detection accuracy.

The present disclosure provides a pressure detection element and a pressure sensor configured to improve pressure detection accuracy.

### SOLUTION TO THE PROBLEM

A pressure detection element according to an aspect of the present disclosure includes: a semiconductor substrate that includes a diaphragm and a frame enclosing the diaphragm in a plan view; and a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect. The first metal interconnect is disposed in a remaining region excluding a first region in the semiconductor substrate. The first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.

A pressure sensor according to another aspect of the present disclosure includes: a pressure detection element; a flow path of a fluid, the flow path being continuous with the pressure detection element; and a meter configured to obtain a pressure detection signal output from the pressure detection element in accordance with a pressure received from the fluid, thereby measuring the pressure. The pressure detection element includes a semiconductor substrate that includes a diaphragm and a frame enclosing the diaphragm in a plan view, and a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect. The first metal interconnect is disposed in a remaining region excluding a first region in the semiconductor substrate. The first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.

### ADVANTAGEOUS EFFECTS OF THE INVENTION

According to the present disclosure, it is possible to improve pressure detection accuracy.

### BRIEF DESCRIPTION OF THE DRAWINGS

FIG. 1 is an exploded perspective view schematically illustrating an example of a pressure sensor according to an embodiment of the present disclosure;
FIG. 2 is a block diagram illustrating an example of an equivalent circuit corresponding to a circuit configuration in a pressure detection element according to an embodiment of the present disclosure;
FIG. 3 is a plan view schematically illustrating an example of an overall configuration of the pressure detection element according to the embodiment;
FIG. 4 is a partial cross-sectional view illustrating an example of a cross section of the pressure detection element cut along line IV-IV illustrated in FIG. 3;
FIG. 5 is a partial cross-sectional view illustrating an example of a cross section of the pressure detection element cut along line V-V illustrated in FIG. 3;
FIG. 6 is an example of a plan view schematically illustrating a layout of metal interconnects provided in a pressure detection element of a Reference Example;
FIG. 7 is a diagram illustrating an example of a stress distribution in a semiconductor substrate of a Reference Example;
FIG. 8 is a schematic plan view illustrating an example of a region in which metal interconnects of the pressure detection element according to the embodiment are not disposed;
FIG. 9 is a plan view schematically illustrating an example of a plane of a pressure detection element according to a Modified Example; and
FIG. 10 is a graph illustrating an example of a relationship between the width of first metal interconnects and a residual stress in Examples.

### DETAILED DESCRIPTION OF THE INVENTION

Hereinafter, embodiments of the present disclosure will be described below with reference to the drawings. In the drawings, the same components are denoted by the same symbols, and thus duplicate description thereof will be omitted.

In the drawings, an orthogonal coordinate having an X axis, a Y axis, and a Z axis is used for directional expressions. The X axis, the Y axis, and the Z axis are orthogonal to each other. A direction along the X axis is described as an X-axis direction. A direction along the Y axis is described as a Y-axis direction. A direction along the Z axis is described as a Z-axis direction. In the X-axis direction, a direction in which an arrow is directed is described as a +X direction or a +X side, and a direction opposite to the +X direction is described as a -X direction or a -X side. In the Y-axis direction, a direction in which an arrow is directed is described as a +Y direction or a +Y side, and a direction opposite to the +Y direction is described as a -Y direction or a -Y side. In the Z-axis direction, a direction in which an arrow is directed is described as a +Z direction or a +Z side, and a direction opposite to the +Z direction is described as a -Z direction or a -Z side. In the present specification, the +Z direction or the +Z side may be referred to as "top" or "upper", and the -Z direction or the -Z side may be referred to as "bottom" or "lower".

In the present specification and the claims, "along a direction" refers to two axes or directions being parallel within a tolerance of ±5 degrees. Also, "orthogonal" means that an angle relative to any direction includes a range of 90 degrees ±5 degrees. However, these directional expressions do not limit directions in the embodiments. Orientations of the pressure detection element and the pressure sensor in use are as desired.

### [Embodiments]

### <Pressure Sensor>

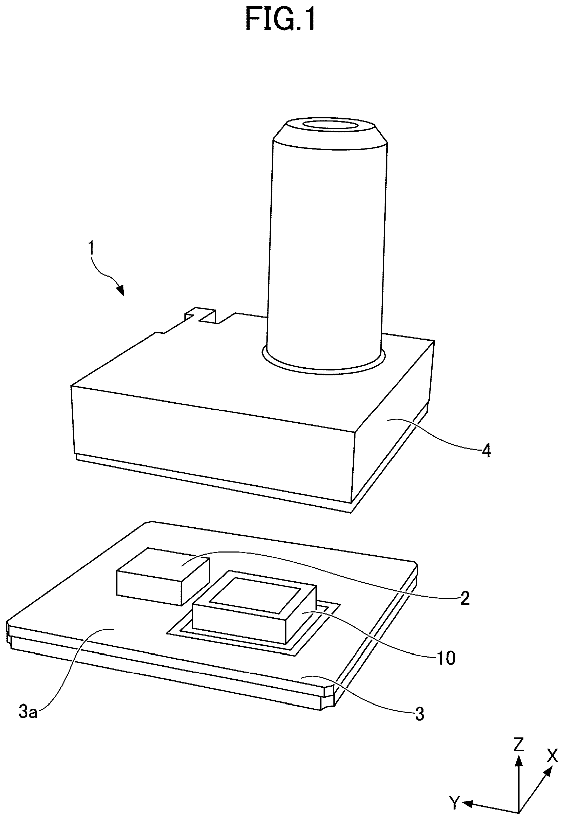

An example of the overall configuration of a pressure sensor 1 according to the embodiment will be described with reference to FIG. 1. FIG. 1 is an exploded perspective view schematically illustrating an example of the pressure sensor 1 according to the embodiment. In the following description, an electrical connection between object A and object B will be simply referred to as "connection".

A pressure sensor 1 illustrated in FIG. 1 includes a pressure detection element 10, a meter 2, a substrate 3, and a cover 4. The pressure detection element 10 and the meter 2 are mounted at different positions at a first surface 3a of the substrate 3. The cover 4 is provided on the first surface 3a side of the substrate 3, and covers the pressure detection element 10 and the meter 2. A flow path of a fluid is provided in the cover 4. The flow path of the fluid in the cover 4 is continuous with the pressure detection element 10.

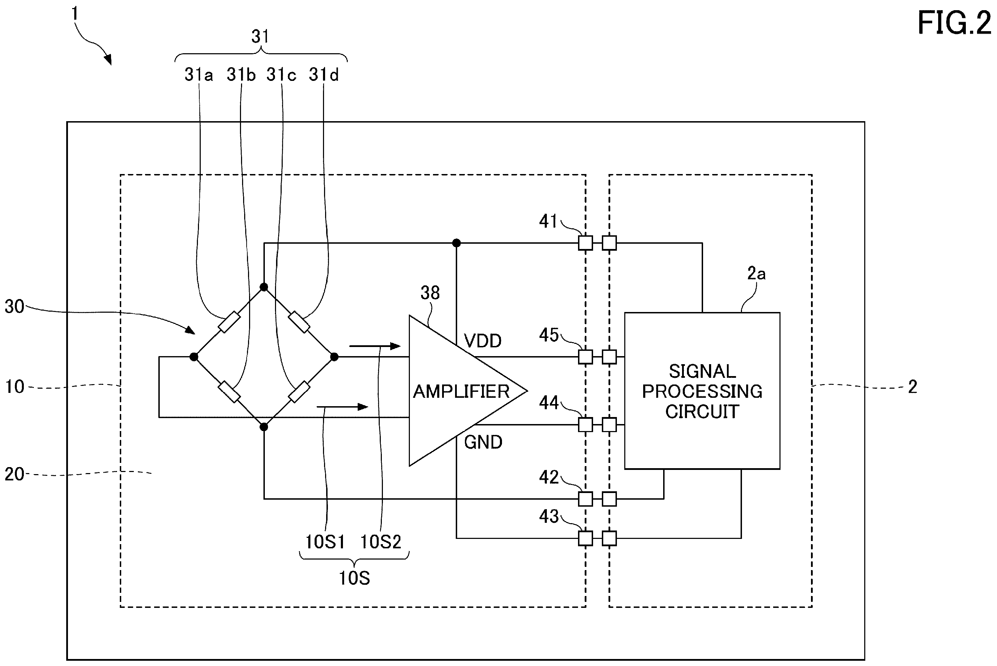

An example of the configuration of the pressure detection element 10 will be described with reference to FIGS. 2 to 5. The pressure detection element 10 and the meter 2 are connected via a conductive wire, such as a bonding wire or the like. A pressure detection signal output from the pressure detection element 10 is transmitted to the meter 2 via the conductive wire. However, a conductor forming a signal transmission path from the pressure detection element 10 to the meter 2 is not limited to the conductive wire.

The meter 2 is configured to obtain the pressure detection signal output from the pressure detection element 10. The meter 2 includes a signal processing circuit 2a configured to convert an analog pressure detection signal, obtained from the pressure detection element 10, to a digital signal. The signal processing circuit 2a is also configured to process the converted digital signal, thereby measuring a pressure. The signal processing circuit 2a includes, for example, an electronic circuit, such as an analog front end, a microcomputer, or the like.

The substrate 3 may be a wiring substrate including the first surface 3a and interconnects in the interior of the wiring substrate. The interconnects of the substrate 3 are connected to, for example, an external power supply circuit. The pressure detection element 10 and the meter 2 are connected to an external power supply circuit via the interconnects provided in the substrate 3. For example, the interconnects provided in the substrate 3 are connected to the pressure detection element 10 and the meter 2 via the conductive wire. With this configuration, the external power supply circuit supplies a power supply potential and a reference potential to the pressure detection element 10 and the meter 2. However, the conductor forming a path through which the power supply potential and the reference potential are to be supplied from the external power supply circuit to the pressure detection element 10 and the meter 2 is not limited to the conductive wire.

### <Pressure Detection Element 10>

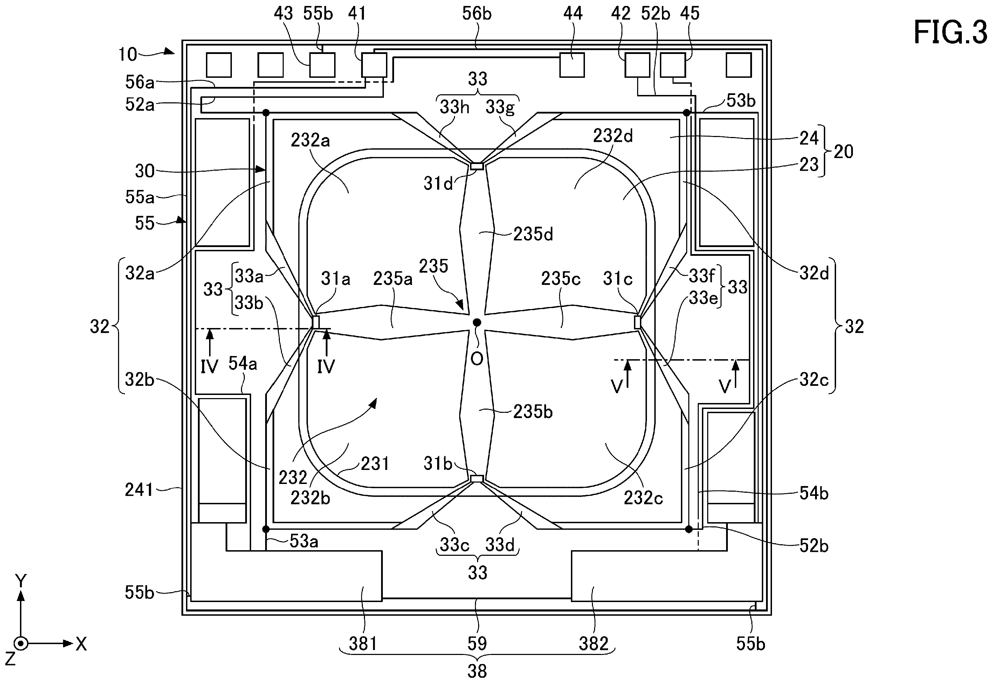

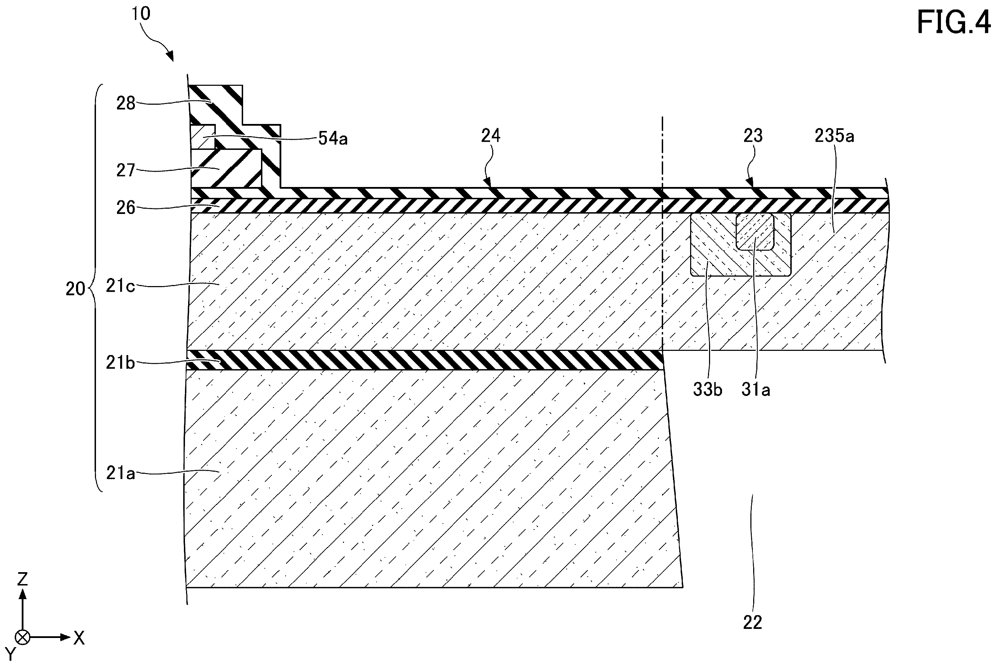

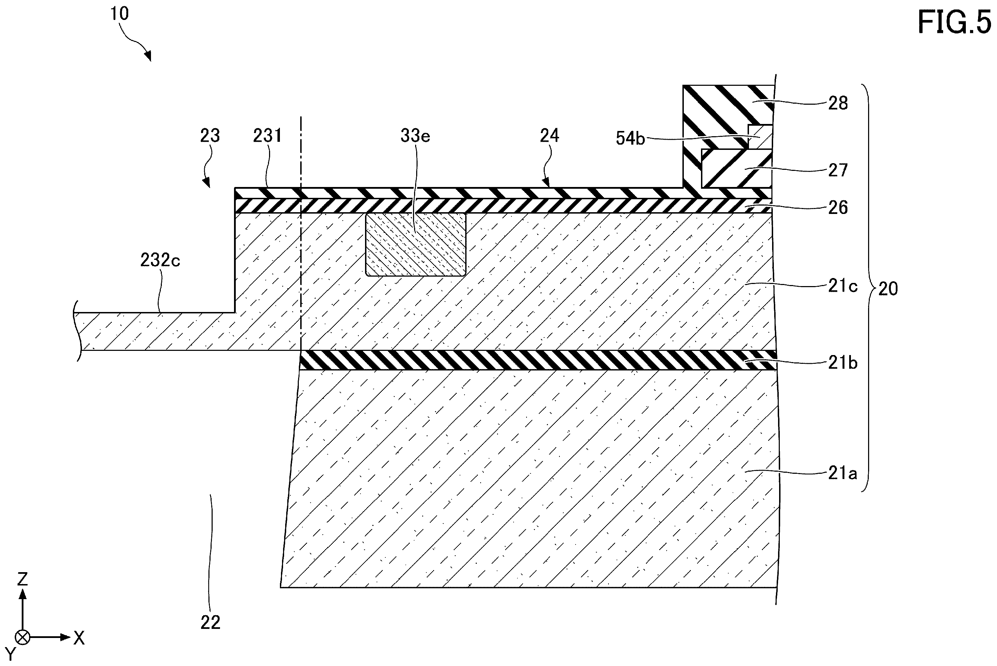

Next, an example of the configuration of the pressure detection element 10 will be described with reference to FIGS. 2 to 5. FIG. 2 is a block diagram illustrating an example of an equivalent circuit corresponding to a circuit configuration in the pressure detection element 10. FIG. 3 is a plan view schematically illustrating an example of an overall configuration of the pressure detection element 10. FIG. 4 is a partial cross-sectional view illustrating an example of a cross section of the pressure detection element 10 cut along line IV-IV illustrated in FIG. 3. FIG. 5 is a partial cross-sectional view illustrating an example of a cross section of the pressure detection element 10 cut along line V-V illustrated in FIG. 3. For the sake of convenience of description, FIG. 3 omits illustration of a surface oxide film, an interlayer insulating film, and a protective film of the semiconductor substrate included in the pressure detection element 10. In other words, for the sake of convenience of description, in FIG. 3, piezoresistors (or piezoresistive elements), diffusion interconnects, and various metal interconnects included in the pressure detection element 10 are illustrated to be exposed from the top surface of the semiconductor substrate.

As illustrated in FIG. 2, the pressure detection element 10 includes a semiconductor substrate 20 and a bridge circuit 30. The pressure detection element 10 may further include an amplifier 38 and various terminals, such as a power supply potential terminal 41, a first reference potential terminal 42, a second reference potential terminal 43, a first output terminal 44, a second output terminal 45, and the like. The pressure detection element 10 may further include, for example, other circuit components other than the amplifier 38. Examples of the other circuit components include a constant current supply circuit configured to supply a constant current to the amplifier 38. However, the other circuit components are not limited to a constant current supply circuit. The first output terminal 44 and the second output terminal 45 are examples of an "output terminal".

In addition to metal interconnects included in the bridge circuit 30 (first metal interconnects 32, which will be described below), the pressure detection element 10 may include other metal interconnects (second metal interconnects, third metal interconnects, fourth metal interconnects, fifth metal interconnects, and sixth metal interconnects, which will be described below).

### (Semiconductor Substrate 20)

An example of the configuration of the semiconductor substrate 20 will be described below. The semiconductor substrate 20 is formed using, for example, an SOI (Silicon On Insulator) substrate. The semiconductor substrate 20 formed using the SOI substrate includes, for example, a support layer 21a formed of a semiconductor, such as silicon (Si) or the like, a BOX (Buried Oxide) layer 21b formed of an insulator, such as silicon dioxide (SiO₂) or the like, and an active layer 21c formed of a semiconductor, such as Si or the like.

As illustrated in FIG. 3, the semiconductor substrate 20 has a substantially rectangular shape in a plan view. However, the shape of the semiconductor substrate 20 in a plan view is not limited to the substantially rectangular shape. The shape of the semiconductor substrate 20 in a plan view may be any other shape, such as a substantially circular shape, a substantially elliptical shape, a substantially polygonal shape, or the like.

In a plan view, the semiconductor substrate 20 includes a diaphragm 23 disposed in a center region, and a frame 24 enclosing the diaphragm 23. The thickness of the diaphragm 23 is smaller than the thickness of the frame 24. The diaphragm 23 is deflected by receiving a pressure from a fluid. The frame 24 is continuous with an outer periphery 231 of the diaphragm 23. Here, the outer periphery 231 is a region in which the active layer 21c is thicker than in a region inward of the outer periphery 231 in the diaphragm 23. The frame 24 supports the diaphragm 23. In the example illustrated in FIG. 3, an outer periphery 241 of the frame 24 corresponds to the outer periphery of the semiconductor substrate 20. The outer periphery 241 of the frame 24 may be referred to as "the outer periphery 241 of the semiconductor substrate 20".

As illustrated in FIGS. 4 and 5, the diaphragm 23 faces a -Z-side surface of the support layer 21a, i.e., a recess 22 that is recessed from the -Z-side surface toward a +Z-side surface of the semiconductor substrate 20. The recess 22 is formed by removing the center region of the support layer 21a and the BOX layer 21b of the semiconductor substrate 20 in a plan view, for example, by a processing method, such as etching or the like. The diaphragm 23 is formed of the active layer 21c of the semiconductor substrate 20. In the example illustrated in FIGS. 3 to 5, the frame 24 corresponds to the remaining region excluding the diaphragm 23 of the semiconductor substrate 20. As illustrated in FIGS. 4 and 5, the frame 24 includes the support layer 21a, the BOX layer 21b, and the active layer 21c of the semiconductor substrate 20. The diaphragm 23 and the frame 24 are structurally integrated. In the active layer 21c, preferably, the thickness of a portion forming the outer periphery 231 of the diaphragm 23 is substantially the same as the thickness of a portion forming the frame 24.

As illustrated in FIGS. 3 and 5, the diaphragm 23 may include: a plurality of grooves 232a, 232b, 232c, and 232d, which are recessed toward the -Z side; and a plurality of beams 235a, 235b, 235c, and 235d, which are disposed between the plurality of grooves 232a, 232b, 232c, and 232d and project toward the +Z side beyond the grooves 232a, 232b, 232c, and 232d.

In the diaphragm 23, the remaining regions excluding the outer periphery 231 and the beams 235a, 235b, 235c, and 235d correspond to the regions of the grooves 232a, 232b, 232c, and 232d. When the grooves 232a, 232b, 232c, and 232d are described without distinction, these are collectively referred to as "grooves 232", hereinafter. When the beams 235a, 235b, 235c, and 235d are described without distinction, these are collectively referred to as "beams 235", hereinafter. In the example illustrated in FIG. 3, the diaphragm 23 includes four grooves 232 and four beams 235. Two of the four grooves 232 are disposed next to each other via one of the beams 235. However, the number of grooves 232 and beams 235 included in the diaphragm 23 is not limited to this.

The beams 235 extend in different directions from a center O of the diaphragm 23 in a plan view, and are continuous with the outer periphery 231 of the diaphragm 23. Specifically, the beam 235a extends from the center O toward the -X side, and is continuous with the -X-side region of the outer periphery 231. The beam 235b extends from the center O toward the -Y side, and is continuous with the -Y-side region of the outer periphery 231. The beam 235c extends from the center O toward the +X side, and is continuous with the +X-side region of the outer periphery 231. The beam 235d extends from the center O toward the +Y side, and is continuous with the +Y-side region of the outer periphery 231. The ends of the beams 235 closer to the center O are referred to as "inner ends", hereinafter. The ends of the beams 235 closer to the outer periphery 231 are referred to as "outer ends", hereinafter.

The beams 235 have a substantially rhombic shape in a plan view. In other words, the width of the beams 235 becomes smaller in the regions at the inner end and the outer end of the beams 235, while the width of the beams 235 becomes the thickest in an intermediate region between the inner end and the outer end. However, the shape of the beams 235 in a plan view is not limited to the substantially rhombic shape. The shape of the beams 235 in a plan view may be any other shape, such as a substantially rectangular shape, a substantially elliptical shape, or the like.

As illustrated in FIGS. 4 and 5, preferably, the semiconductor substrate 20 further includes a surface oxide film 26, an interlayer insulating film 27, and a protective film 28. The surface oxide film 26 is disposed over the active layer 21c. The surface oxide film 26 is, for example, a thermal oxide film that is formed over the surface of the active layer 21c when the semiconductor substrate 20 is heated. The interlayer insulating film 27 is disposed over the surface oxide film 26. Various types of metal interconnects, such as the separately described first metal interconnects, second metal interconnects, third metal interconnects, fourth metal interconnects, fifth metal interconnects, sixth metal interconnects, and the like are disposed over the interlayer insulating film 27. For example, a plurality of interlayer insulating films 27 may be provided. The plurality of interlayer insulating films 27 may be provided, for example, at different positions in the Z-axis direction. For preventing a short circuit between at least two metal interconnects of the first metal interconnects, the second metal interconnects, the third metal interconnects, the fourth metal interconnects, the fifth metal interconnects, and the sixth metal interconnects, these different metal interconnects may be disposed, for example, at different positions in the Z-axis direction via a single interlayer insulating film 27. The protective film 28 is an insulating film disposed over the interlayer insulating film 27 and the metal interconnects.

### (Bridge Circuit 30)

An example of the configuration of the bridge circuit 30 will be described. The bridge circuit 30 is configured to detect a pressure received from the fluid, and output a pressure detection signal. The bridge circuit 30 includes a plurality of piezoresistors 31a, 31b, 31c, and 31d, a plurality of first metal interconnects 32a, 32b, 32c, and 32d, and a plurality of diffusion interconnects 33a, 33b, 33c, 33d, 33e, 33f, 33g, and 33h. When the piezoresistors 31a, 31b, 31c, and 31d are described without distinction, these are collectively referred to as "piezoresistors 31". When the first metal interconnects 32a, 32b, 32c, and 32d are described without distinction, these are collectively referred to as "first metal interconnects 32". When the diffusion interconnects 33a, 33b, 33c, 33d, 33e, 33f, 33g, and 33h are described without distinction, these are collectively referred to as "diffusion interconnects 33".

The piezoresistors 31 are disposed in the diaphragm 23 of the semiconductor substrate 20. The piezoresistors 31 correspond to an impurity diffusion region of a conductive type different from that of the active layer 21c. For example, when the active layer 21c is formed of an n-type semiconductor, the piezoresistors 31 correspond to a p-type impurity diffusion region. When the diaphragm 23 is deflected by receiving a pressure from a fluid, the piezoresistors 31 are distorted. This causes a change in the electrical resistance of the piezoresistors 31. The change in electrical resistance of the piezoresistors 31, induced by fluid pressure application, is output externally as a pressure detection signal.

In the example illustrated in FIG. 3, the piezoresistor 31a is disposed at the outer end of the beam 235a. The piezoresistor 31b is disposed at the outer end of the beam 235b. The piezoresistor 31c is disposed at the outer end of the beam 235c. The piezoresistor 31d is disposed at the outer end of the beam 235d. That is, the different piezoresistors 31 are disposed at the outer ends of the different beams 235. This can improve pressure detection sensitivity of the bridge circuit 30, and can widen a detection range until saturation of the pressure detection signal output from the bridge circuit 30. That is, it is possible to improve the pressure detection accuracy of the bridge circuit 30.

The first metal interconnects 32 connect adjacent piezoresistors 31 of the piezoresistors 31. The first metal interconnects 32 are disposed at positions that are apart from each other. For example, the first metal interconnect 32a connects the piezoresistor 31a to the piezoresistor 31d. The first metal interconnect 32b connects the piezoresistor 31a to the piezoresistor 31b. The first metal interconnect 32c connects the piezoresistor 31b to the piezoresistor 31c. The first metal interconnect 32d connects the piezoresistor 31c to the piezoresistor 31d.

The first metal interconnects 32 are disposed in the frame 24. The first metal interconnects 32 are, for example, aluminum (Al) interconnects. However, the material forming the first metal interconnects 32 may be a metal material different from Al. In the present specification, the metal encompasses alloys, and the metal material encompasses alloy materials. Hereinafter, the same applies to references to "metal" or "metal material". The first metal interconnects 32 may include semiconductor materials (e.g., diffusion interconnects) in localized regions, meaning neither individual interconnects nor the entire set requires complete metallic composition. Similarly, the other metal interconnects, such as the second metal interconnects, the third metal interconnects, the fourth metal interconnects, the fifth metal interconnects, the sixth metal interconnects, and the like, may include a semiconductor material, such as a diffusion interconnect or the like, in a part of any of the other metal interconnects.

The width of the first metal interconnects 32 is preferably larger than the width of the other metal interconnects, such as the second metal interconnects, the third metal interconnects, the fourth metal interconnects, the fifth metal interconnects, the sixth metal interconnects, and the like. By increasing the width of the first metal interconnects 32 compared to the width of the other metal interconnects, it is possible to reduce an influence of the interconnect resistance of the first metal interconnects 32 on pressure detection signals 10S. This can improve the pressure detection accuracy.

In FIG. 3 and some other drawings, the first metal interconnects 32 are drawn as a substantially beltlike region defined by one pair of inner and outer lines that face each other and extend in parallel. On the other hand, the separately described second metal interconnects, third metal interconnects, fourth metal interconnects, fifth metal interconnects, sixth metal interconnects, and the like are drawn with just a single line. This is for the sake of convenience of description. The actual width of each metal interconnect is not defined by the width of the line corresponding to each metal interconnect illustrated in FIG. 3 and some other drawings.

The diffusion interconnects 33 are disposed at positions that are apart from each other. The diffusion interconnects 33 are disposed between the piezoresistors 31 and the first metal interconnects 32. For example, the diffusion interconnect 33a is disposed between the piezoresistor 31a and the first metal interconnect 32a. The diffusion interconnect 33b is disposed between the piezoresistor 31a and the first metal interconnect 32b. The diffusion interconnect 33c is disposed between the piezoresistor 31b and the first metal interconnect 32b. The diffusion interconnect 33d is disposed between the piezoresistor 31b and the first metal interconnect 32c. The diffusion interconnect 33e is disposed between the piezoresistor 31c and the first metal interconnect 32c. The diffusion interconnect 33f is disposed between the piezoresistor 31c and the first metal interconnect 32d. The diffusion interconnect 33g is disposed between the piezoresistor 31d and the first metal interconnect 32d. The diffusion interconnect 33h is disposed between the piezoresistor 31d and the first metal interconnect 32a.

The diffusion interconnects 33 extend outward from the piezoresistors 31 in a plan view. The diffusion interconnects 33 are disposed in the frame 24 of the semiconductor substrate 20. However, at least a part of the diffusion interconnects 33 may be disposed in the diaphragm 23.

As illustrated in FIGS. 3 and 4, the diffusion interconnects 33 correspond to an impurity diffusion region of a conductive type different from that of the active layer 21c corresponding to the diaphragm 23. For example, when the active layer 21c is formed of an n-type semiconductor, the diffusion interconnects 33 correspond to a p-type impurity diffusion region. The impurity concentration of the diffusion interconnects 33 is higher than the impurity concentration of the piezoresistors 31. The diffusion interconnects 33 have a higher conductivity than the conductivity of the piezoresistors 31. The diffusion interconnects 33 are continuous with the piezoresistors 31. The diffusion interconnects 33 may be connected to the first metal interconnects 32 via a conductor, such as a contact plug or the like.

As illustrated in FIG. 3, the width of the diffusion interconnects 33 increases from the end on the piezoresistor 31 side toward the end on the first metal interconnect 32 side. This enables connection of the diffusion interconnects 33 to the smaller piezoresistors 31, and reduction in electrical resistance of the diffusion interconnects 33. As a result, a signal indicating a change in the electrical resistance of the piezoresistors 31 by application of a pressure from a fluid can be stably transmitted to the first metal interconnects 32. That is, the pressure detection accuracy of the bridge circuit 30 can be improved.

The piezoresistors 31 are bridge-connected via the first metal interconnects 32 and the diffusion interconnects 33. This arrangement constitutes a Wheatstone bridge circuit configured to detect the pressure of a fluid. In other words, the bridge circuit 30 includes a Wheatstone bridge circuit formed of the piezoresistors 31, the first metal interconnects 32, and the diffusion interconnects 33.

### (Amplifier 38)

An example of the configuration of the amplifier 38 will be described. The amplifier 38 is configured to amplify the pressure detection signals 10S output from the bridge circuit 30. The amplified pressure detection signals 10S are an example of an "amplified signal". Here, the pressure detection signals 10S include: a first voltage signal 10S1 corresponding to a first voltage between the piezoresistor 31a and the piezoresistor 31b in the bridge circuit 30; and a second voltage signal 10S2 corresponding to a second voltage between the piezoresistor 31c and the piezoresistor 31d in the bridge circuit 30.

The first voltage corresponds to a voltage value between the power supply potential and the first reference potential, obtained by voltage division using a value (resistance value) of the electrical resistance of the piezoresistor 31a and a resistance value of the piezoresistor 31b. The second voltage corresponds to a voltage value between the power supply potential and the first reference potential, obtained by voltage division using a resistance value of the piezoresistor 31c and a resistance value of the piezoresistor 31d. The first voltage signal 10S1 and the second voltage signal 10S2 are amplified by the amplifier 38, and then output to the meter 2 via the first output terminal 44 and the second output terminal 45, which will be described below. The meter 2 calculates a difference between the first voltage and the second voltage, and calculates a pressure corresponding to the calculated difference.

The amplifier 38 includes a first amplification circuit 381 and a second amplification circuit 382 configured to amplify the first voltage signal 10S1 and the second voltage signal 10S2, respectively. The first amplification circuit 381 and the second amplification circuit 382 are connected via a metal interconnect 59. In the example illustrated in FIG. 3, the amplifier 38 is disposed along the -Y-side peripheral region of the outer periphery 241 of the frame 24. However, the position of the amplifier 38 is not limited to this.

The first amplification circuit 381 amplifies the first voltage signal 10S1. The first amplification circuit 381 outputs a signal corresponding to the amplified first voltage signal 10S1 toward the first output terminal 44. The second amplification circuit 382 amplifies the second voltage signal 10S2. The second amplification circuit 382 outputs a signal corresponding to the amplified second voltage signal 10S2 toward the second output terminal 45.

The first amplification circuit 381 and the second amplification circuit 382 each include, for example, an operational amplifier, and resistance elements connected to the operational amplifier, such as an input resistor, a feedback resistor, and the like. The first amplification circuit 381 and the second amplification circuit 382 may each further include, for example, other circuit elements, such as a capacitor and the like.

For transmitting, to the first amplification circuit 381, the first voltage signal 10S1 output from the bridge circuit 30, the first metal interconnect 32b and the first amplification circuit 381 are connected via the third metal interconnect 53a. The first amplification circuit 381 and the first output terminal 44 are connected via the fourth metal interconnect 54a. Thus, the first voltage signal 10S1 output from the bridge circuit 30 is output to the meter 2 via the third metal interconnect 53a, the first amplification circuit 381, the fourth metal interconnect 54a, and the first output terminal 44. In FIG. 3, a portion of the fourth metal interconnect 54a overlapping with other metal interconnects in a plan view is indicated by a dashed line. However, this is for the sake of convenience of describing that the fourth metal interconnect 54a is not structurally connected to other metal interconnects overlapping with the fourth metal interconnect 54a in a plan view. For example, a dashed-line portion of the fourth metal interconnect 54a illustrated in FIG. 3 may be a diffusion interconnect, and a solid-line portion and the dashed line portion may be continuous with each other by this diffusion interconnect.

For transmitting, to the second amplification circuit 382, the second voltage signal 10S2 output from the bridge circuit 30, the first metal interconnect 32d and the second amplification circuit 382 are connected via the third metal interconnect 53b. The second amplification circuit 382 and the second output terminal 45 are connected via the fourth metal interconnect 54b. Thus, the second voltage signal 10S2 output from the bridge circuit 30 is output to the meter 2 via the third metal interconnect 53b, the second amplification circuit 382, the fourth metal interconnect 54b, and the second output terminal 45. In FIG. 3, a portion of the fourth metal interconnect 54b overlapping with other metal interconnects in a plan view is indicated by a dashed line. However, this is for the sake of convenience of describing that the fourth metal interconnect 54b is not structurally connected to other metal interconnects overlapping with the fourth metal interconnect 54b in a plan view. For example, a dashed-line portion of the fourth metal interconnect 54b illustrated in FIG. 3 may be a diffusion interconnect, and a solid-line portion and the dashed line portion may be continuous with each other by this diffusion interconnect.

### (Power Supply Potential Terminal 41)

An example of the configuration of the power supply potential terminal 41 will be described. The power supply potential terminal 41 is connected to an external power supply circuit. A power supply potential from the external power supply circuit is supplied to the bridge circuit 30 via the power supply potential terminal 41.

The power supply potential terminal 41 is, for example, a VDD terminal. The power supply potential terminal 41 is connected to the first metal interconnect 32a of the bridge circuit 30 via the second metal interconnect 52a. That is, a power supply potential from the power supply potential terminal 41 is supplied to the piezoresistor 31a via the second metal interconnect 52a, the first metal interconnect 32a, and the diffusion interconnect 33a. Also, a power supply potential from the power supply potential terminal 41 is supplied to the piezoresistor 31d via the second metal interconnect 52a, the first metal interconnect 32a, and the diffusion interconnect 33h.

The power supply potential terminal 41 is a conductor pattern formed of a metal material, such as Al or the like. In the example illustrated in FIG. 3, the power supply potential terminal 41 is disposed near the +Y-side end of the outer periphery 241 of the frame 24. However, the power supply potential terminal 41 may be disposed near any other end of the outer periphery 241 of the frame 24.

The power supply potential from the power supply potential terminal 41 may be supplied to the amplifier 38. In the example illustrated in FIG. 3, the power supply potential terminal 41 and the first amplification circuit 381 are connected via the sixth metal interconnect 56a. Here, the power supply potential terminal 41 and the first amplification circuit 381 are disposed near opposing ends of the frame 24. Therefore, the sixth metal interconnect 56a includes, for example, an interconnecting region along the vicinity of the -X-side end of the outer periphery 241 of the frame 24, so as to connect the power supply potential terminal 41 and the first amplification circuit 381, which are disposed at distant positions. That is, as illustrated in FIG. 3, the interconnecting region occupying the majority of the sixth metal interconnect 56a is disposed near the outer periphery 241 of the frame 24.

When the sixth metal interconnect 56a includes an interconnecting region along the vicinity of the outer periphery 241 of the frame 24, it is possible to dispose the sixth metal interconnect 56a at a position relatively distant from the piezoresistors 31. The sixth metal interconnect 56a formed of a metal material, such as Al or the like, can have a residual stress due to thermal expansion in the process of a thermal treatment or the like during the production of the pressure detection element 10. When the sixth metal interconnect 56a and the piezoresistors 31 are disposed at positions relatively distant from each other, even if a stress distribution in the semiconductor substrate 20 changes in accordance with the residual stress of the sixth metal interconnect 56a, the difference between the stresses applied to the piezoresistors 31 can be reduced. This can reduce an influence on the output characteristics of the pressure detection element 10 at the initial time. That is, it is possible to improve the pressure detection accuracy. The "initial time" means a period during which a pressure from a fluid is not applied to the pressure detection element 10.

For example, the sixth metal interconnect 56a may be connected to other circuit components disposed in the frame 24. That is, the power supply potential from the power supply potential terminal 41 may be supplied to the other circuit components via the sixth metal interconnect 56a. When the sixth metal interconnect 56a includes an interconnecting region along the vicinity of the outer periphery 241 of the frame 24, there is no need to significantly increase interconnecting regions for supplying the power supply potential to the other circuit components, leading to a reduction in cost. Also, because the metal interconnects (the sixth metal interconnect 56a) configured to supply the power supply potential to the other circuit components are distant from the piezoresistors 31, even if the stress distribution in the semiconductor substrate 20 changes in accordance with the residual stress of the sixth metal interconnect 56a, the difference between the stresses applied to the piezoresistors 31 can be reduced. This can reduce an influence on the output characteristics of the pressure detection element 10 at the initial time. That is, it is possible to improve the pressure detection accuracy.

The power supply potential terminal 41 and the second amplification circuit 382 are connected via the sixth metal interconnect 56b. Here, the power supply potential terminal 41 and the second amplification circuit 382 are disposed near opposing ends of the frame 24. Therefore, the sixth metal interconnect 56b includes, for example, an interconnecting region along the vicinity of the +Y-side end and the vicinity of the +X-side end of the outer periphery 241 of the frame 24, so as to connect the power supply potential terminal 41 and the second amplification circuit 382, which are disposed at distant positions. That is, the interconnecting region occupying the majority of the sixth metal interconnect 56b is disposed near the outer periphery 241 of the frame 24. Similar to the sixth metal interconnect 56a, the sixth metal interconnect 56b can have a residual stress due to thermal expansion in the process of a thermal treatment or the like during the production of the pressure detection element 10. When the sixth metal interconnect 56b and the piezoresistors 31 are disposed at positions relatively distant from each other, even if a stress distribution in the semiconductor substrate 20 changes in accordance with the residual stress of the sixth metal interconnect 56b, the difference between the stresses applied to the piezoresistors 31 can be reduced. This can reduce an influence on the output characteristics of the pressure detection element 10 at the initial time. That is, it is possible to improve the pressure detection accuracy.

For example, the sixth metal interconnect 56b may be connected to other circuit components disposed in the frame 24. That is, the power supply potential from the power supply potential terminal 41 may be supplied to the other circuit components via the sixth metal interconnect 56b. When the sixth metal interconnect 56b includes an interconnecting region along the vicinity of the outer periphery 241 of the frame 24, there is no need to significantly increase interconnecting regions for supplying the power supply potential to the other circuit components, leading to a reduction in cost. Also, because the metal interconnects (the sixth metal interconnect 56b) configured to supply the power supply potential to the other circuit components are distant from the piezoresistor 31, even if the stress distribution in the semiconductor substrate 20 changes in accordance with the residual stress of the sixth metal interconnect 56b, the difference between the stresses applied to the piezoresistors 31 can be reduced. This can reduce an influence on the output characteristics of the pressure detection element 10 at the initial time. That is, it is possible to improve the pressure detection accuracy.

In the example illustrated in FIG. 3, the sixth metal interconnect 56a and the sixth metal interconnect 56b are structurally separate metal interconnects. However, the sixth metal interconnect 56a and the sixth metal interconnect 56b may be a structurally integrated (continuous) metal interconnect. For example, the continuous metal interconnect formed of the sixth metal interconnect 56a and the sixth metal interconnect 56b may have a substantially annular shape formed by starting from the power supply potential terminal 41, being routed along the outer periphery 241 of the frame 24, and returning to the power supply potential terminal 41. In this case, the sixth metal interconnect 56a and the sixth metal interconnect 56b may be connected to the first amplification circuit 381 and the second amplification circuit 382 via branches that are branched from the continuous metal interconnect including the sixth metal interconnect 56a and the sixth metal interconnect 56b. The branches that are branched from the continuous metal interconnect may be formed of a metal material, such as Al or the like.

### (First Reference Potential Terminal 42)

An example of the configuration of the first reference potential terminal 42 will be described. A first reference potential from the external power supply circuit is supplied to the bridge circuit 30 via the first reference potential terminal 42. No limitation is imposed on the first reference potential as long as the first reference potential is lower than the power supply potential. For example, the first reference potential is a ground potential.

The first reference potential terminal 42 is, for example, a COM terminal configured to supply a low potential to the bridge circuit 30. The first reference potential terminal 42 is connected to the first metal interconnect 32c via the second metal interconnect 52b. That is, the first reference potential from the first reference potential terminal 42 is supplied to the piezoresistor 31b via the second metal interconnect 52b, the first metal interconnect 32c, and the diffusion interconnect 33d. The first reference potential from the first reference potential terminal 42 is supplied to the piezoresistor 31c via the second metal interconnect 52b, the first metal interconnect 32c, and the diffusion interconnect 33e.

The first reference potential terminal 42 is a conductor pattern formed of a metal material, such as Al or the like. In the example illustrated in FIG. 3, the first reference potential terminal 42 is disposed next to the power supply potential terminal 41 near the +Y-side end of the outer periphery 241 of the frame 24. When the first reference potential terminal 42 is next to the power supply potential terminal 41 near one of the ends of the outer periphery 241 of the frame 24, it is possible to readily achieve interconnection between the pressure detection element 10 and the external power supply circuit. However, the first reference potential terminal 42 may be disposed near any other end of the outer periphery 241 of the frame 24.

### (Second Reference Potential Terminal 43)

An example of the configuration of the second reference potential terminal 43 will be described. The second reference potential terminal 43 is connected to an external power supply circuit. The second reference potential from the external power supply circuit is supplied to the amplifier 38 via the second reference potential terminal 43. No limitation is imposed on the second reference potential as long as the second reference potential is lower than the power supply potential. The second reference potential may be a potential the same as or different from the first reference potential. For example, the second reference potential is a ground potential.

The second reference potential terminal 43 is, for example, a VSS terminal. The second reference potential terminal 43 is connected to the amplifier 38, i.e., the first amplification circuit 381 and the second amplification circuit 382, via the fifth metal interconnects 55. Here, the second reference potential terminal 43 and the amplifier 38 are disposed near opposing ends at the outer periphery 241 of the frame 24. Therefore, preferably, the fifth metal interconnects 55 have, for example, an annular shape along the outer periphery 241 of the frame 24 in a plan view, so as to connect the second reference potential terminal 43 and the amplifier 38, which are disposed at distant positions.

For example, the fifth metal interconnects 55 may include, in a plan view, an annular path 55a that is annularly disposed along the outer periphery 241 of the frame 24, and a plurality of branches 55b that are branched from the annular path 55a. The branches 55b extend, from the annular path 55a, toward the first amplification circuit 381, the second amplification circuit 382, and the second reference potential terminal 43. When the fifth metal interconnects 55 include the annular path 55a and the branches 55b, it is possible to connect the second reference potential terminal 43 and the amplifier 38, which are disposed at distant positions, while reducing the area of the interconnecting region corresponding to the fifth metal interconnects 55. Also, the fifth metal interconnects 55 can have a residual stress due to thermal expansion in the process of a thermal treatment or the like during the production of the pressure detection element 10. Thus, when the fifth metal interconnects 55 and the piezoresistors 31 are disposed at distant positions, even if a stress distribution in the semiconductor substrate 20 changes in accordance with the residual stress of the fifth metal interconnects 55, the difference between the stresses applied to the piezoresistors 31 can be reduced. This can reduce an influence on the output characteristics of the pressure detection element 10 at the initial time. That is, it is possible to improve the pressure detection accuracy.

The sixth metal interconnect 56a may be disposed substantially annularly along the outer periphery 241 of the frame 24 in a plan view. For example, the sixth metal interconnect 56a may be disposed substantially annularly inside the annular path 55a of the fifth metal interconnects 55. As a result, the power supply potential can be stably supplied to each of the circuit components.

For example, the fifth metal interconnects 55 may be connected to other circuit components disposed in the frame 24. That is, the second reference potential from the second reference potential terminal 43 may be supplied to the other circuit components via the fifth metal interconnects 55. When the fifth metal interconnects 55 include the annular path 55a and the branches 55b, the second reference potential can be supplied to the other circuit components without significantly increasing interconnecting regions connected to the other circuit components. Also, when the fifth metal interconnects 55 include the interconnecting region along the vicinity of the outer periphery 241 of the frame 24, there is no need to significantly increase interconnecting regions for supplying the second reference potential to the other circuit components, leading to a reduction in cost. Further, because the metal interconnects (the fifth metal interconnects 55) configured to supply the second reference potential to the other circuit components are distant from the piezoresistor 31, even if the stress distribution in the semiconductor substrate 20 changes in accordance with the residual stress of the fifth metal interconnects 55, the difference between the stresses applied to the piezoresistors 31 can be reduced. This can reduce an influence on the output characteristics of the pressure detection element 10 at the initial time. That is, it is possible to improve the pressure detection accuracy.

The second reference potential terminal 43 is, for example, a conductor pattern formed of a metal material, such as Al or the like. In the example illustrated in FIG. 3, the second reference potential terminal 43 is disposed near the +Y-side end of the outer periphery 241 of the frame 24 in the same manner that the power supply potential terminal 41 and the first reference potential terminal 42 are disposed. That is, the power supply potential terminal 41, the first reference potential terminal 42, and the second reference potential terminal 43 are disposed near the same end of the outer periphery 241 of the frame 24. When the power supply potential terminal 41, the first reference potential terminal 42, and the second reference potential terminal 43 are disposed near the same end of the outer periphery 241 of the frame 24, it is possible to more readily achieve interconnection between the pressure detection element 10 and the power supply circuit. However, the second reference potential terminal 43 may be disposed near any other end of the outer periphery 241 of the frame 24.

### (First Output Terminal 44 and Second Output Terminal 45)

Examples of the configurations of the first output terminal 44 and the second output terminal 45 will be described. The first output terminal 44 and the second output terminal 45 are configured to output, for example, a pressure detection signal, amplified by the amplifier 38, to the meter 2.

The first output terminal 44 and the second output terminal are, for example, a conductor pattern formed of a metal material, such as Al or the like. In the example illustrated in FIG. 3, the first output terminal 44 and the second output terminal 45 are disposed near the +Y-side end of the outer periphery 241 of the frame 24 in the same manner that the power supply potential terminal 41, the first reference potential terminal 42, and the second reference potential terminal 43 are disposed. That is, the power supply potential terminal 41, the first reference potential terminal 42, the second reference potential terminal 43, the first output terminal 44, and the second output terminal 45 are disposed near the same end of the outer periphery 241 of the frame 24. When the power supply potential terminal 41, the first reference potential terminal 42, the second reference potential terminal 43, the first output terminal 44, and the second output terminal 45 are disposed near the same end of the outer periphery 241 of the frame 24, it is possible to more readily achieve interconnection of the pressure detection element 10 with the power supply circuit and the meter 2. However, the first output terminal 44 and the second output terminal may be disposed near any other end of the outer periphery 241 of the frame 24.

### (Influence of Stress in Semiconductor Substrate 20)

As described with reference to FIGS. 3 to 5, the pressure detection element 10 includes, for example, various metal interconnects formed mainly of a metal material, such as Al or the like (the first metal interconnects 32, the second metal interconnects 52a and 52b, the third metal interconnects 53a and 53b, the fourth metal interconnects 54a and 54b, the fifth metal interconnects 55, and the sixth metal interconnects 56a and 56b). These metal interconnects are thermally expanded, for example, in the process of a thermal treatment or the like during the production of the pressure detection element 10. At this time, the metal interconnects can have a stress due to thermal expansion, and the stress can remain even after the temperature is returned to a normal temperature. In other words, a residual stress may be generated in the metal interconnects. Also, the stress distribution in the semiconductor substrate 20 varies at in-plane positions of the semiconductor substrate 20 in accordance with the residual stress in the metal interconnects. Thus, the difference in the stress applied to the piezoresistors 31 may become larger even at the initial time when no pressure is received from a fluid. As a result, the output characteristics of the pressure detection element 10 may be adversely influenced.

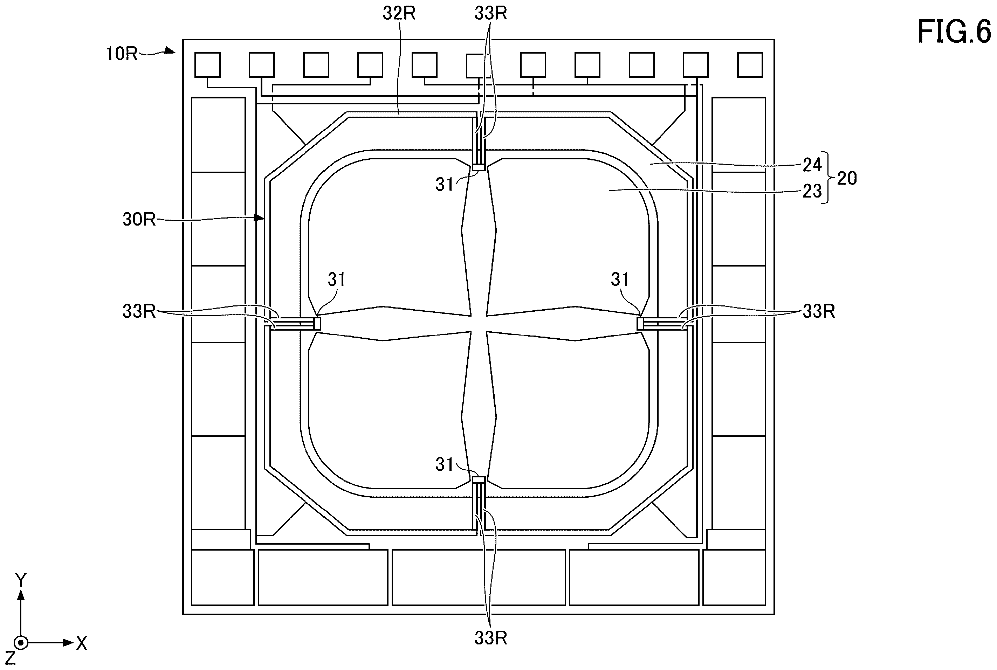

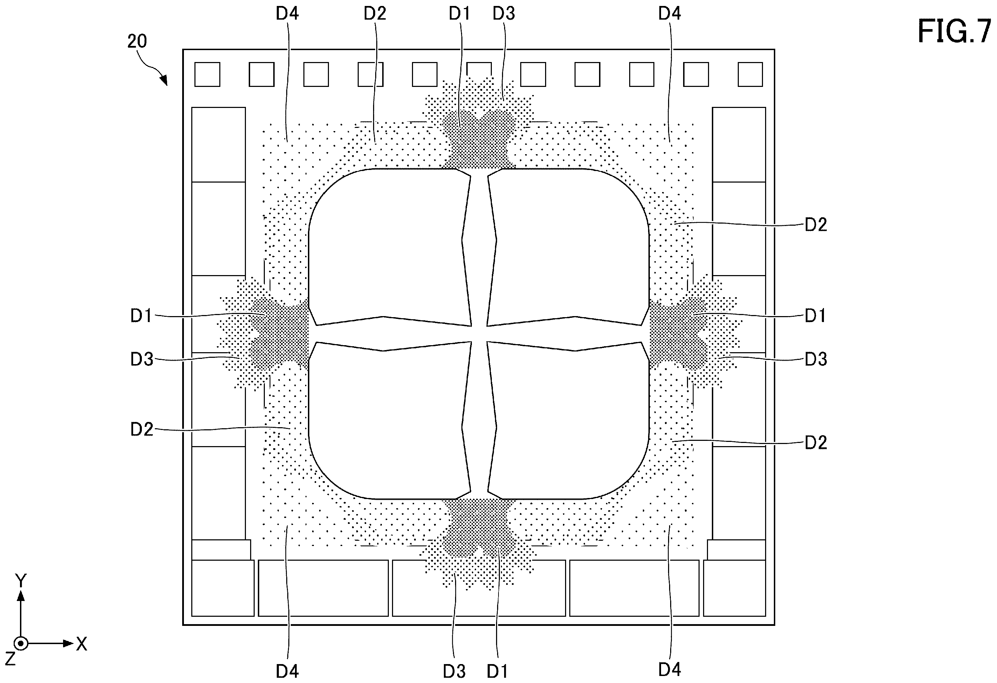

In the present embodiment, the semiconductor substrate 20 is provided with a region in which at least the first metal interconnects 32 are not disposed, thereby reducing an influence of the stress distribution in the semiconductor substrate 20 on the output characteristics of the pressure detection element 10. First, an example of the stress distribution in the semiconductor substrate 20 in the pressure detection element of Reference Example 10R will be described with reference to FIGS. 6 and 7. FIG. 6 is an example of a plan view schematically illustrating a layout of the metal interconnects provided in the semiconductor substrate 20 of Reference Example 10R. FIG. 7 is a diagram illustrating an example of a stress distribution in a semiconductor substrate 20R of Reference Example 10R. The layout of various metal interconnects in Reference Example 10R is different from the layout in the embodiment. In FIG. 7, regions D1 are regions in which a relatively high stress occurs. Hereinafter, the regions D1 will be referred to as "high stress regions D1". When metal interconnects are disposed in the high stress regions D1, there is a high possibility that an influence on the output characteristics due to a variation in the stress distribution at the initial time will not be able to be sufficiently reduced, even if metal thin films or the like are disposed in the other portions of the semiconductor substrate 20. Next, regions D2 are regions in which a relatively low stress occurs. Hereinafter, the regions D2 will be referred to as "low stress regions D2". Next, regions D3 are regions in which a relatively high stress occurs, but the stress is lower than the stress in the high stress regions D1. Hereinafter, the regions D3 will be referred to as "medium stress regions D3". Next, regions D4 are regions in which a relatively low stress occurs, and the stress is lower than the stress in the low stress regions D2. Hereinafter, the regions D4 will be referred to as "very low stress regions D4".

When the metal interconnects are disposed in the medium stress regions D3, there is a possibility that a variation in the stress distribution due to the residual stress of the metal interconnects will remain in the semiconductor substrate 20. However, an influence on the output characteristics can be reduced by correcting the pressure detection signal output from the pressure detection element of Reference Example 10R. Also, when the metal interconnects are disposed in the medium stress regions D3 and further disposed in the low stress regions D2 and the very low stress regions D4, it is possible to reduce an influence on the output characteristics of the pressure detection element 10 or the pressure detection element of Reference Example 10R.

As illustrated in FIG. 6, similar to the embodiment, the pressure detection element of Reference Example 10R includes a bridge circuit 30R over the semiconductor substrate 20, the bridge circuit 30R including the piezoresistors 31, a first metal interconnect 32R, and diffusion interconnects 33R. The first metal interconnect 32R is formed of a metal material, such as Al or the like. However, the diffusion interconnects 33R of the bridge circuit 30R in the pressure detection element of Reference Example 10R extend along the X-axis direction or the Y-axis direction from the piezoresistors 31, and extend toward the outer periphery 241 of the frame 24 in a plan view with substantially the same width. Therefore, it is necessary to reduce the distances between the piezoresistors 31 and the first metal interconnect 32R so as to reduce the electrical resistance of the diffusion interconnects 33R. As a result, the first metal interconnect 32R in Reference Example 10R is disposed in the high stress regions D1 in FIG. 7. Thus, even at the initial time when no pressure is received from a fluid, the difference between the stresses applied to the piezoresistors 31 increases, and thus there is a possibility that the characteristics of the pressure detection signal 10S output by the pressure detection element of Reference Example 10R will change from desired ones.

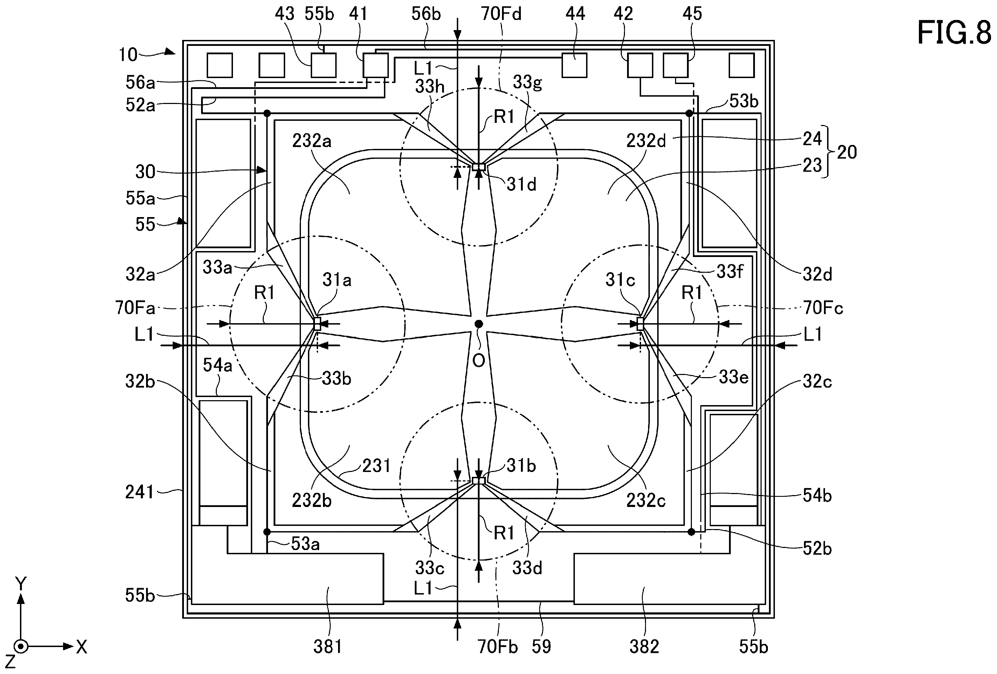

Next, an example of the region in which at least the first metal interconnects 32 are not disposed in the pressure detection element 10 according to the embodiment will be described with reference to FIG. 8. FIG. 8 is a schematic plan view illustrating an example of the region in which the metal interconnects of the pressure detection element 10 according to the embodiment are not disposed.

As illustrated in FIG. 8, in the embodiment, first regions in which at least the first metal interconnects 32 are not disposed are set. Specifically, in a plan view, the first regions correspond to regions of a plurality of imaginary circles 70Fa, 70Fb, 70Fc, and 70Fd having a radius R1 of a predetermined length from the center of each of the piezoresistors 31. That is, the first metal interconnects 32 are disposed in the remaining region excluding the imaginary circles 70Fa, 70Fb, 70Fc, and 70Fd in the semiconductor substrate 20. The center of each of the piezoresistors 31 is, for example, a geometric center of the piezoresistor 31 in a plan view. By using the imaginary circles as the first regions, it is possible to readily dispose the metal interconnects according to a layout rule.

The lengths of the radii R1 of the imaginary circles 70Fa, 70Fb, 70Fc, and 70Fd may be the same or different. The length of the radius R1 of each of the imaginary circles 70Fa, 70Fb, 70Fc, and 70Fd is preferably a length of 0.5 L1 or more and less than L1, where L1 denotes the shortest distance between each of the piezoresistors 31 and the outer periphery 241 of the frame 24. A region of each of the imaginary circles 70Fa, 70Fb, 70Fc, and 70Fd, in which the radius R1 is 0.5 L1 or more and less than L1, includes the high stress region D1 illustrated in FIG. 7. Therefore, by using, as the first region, the region of each of the imaginary circles 70Fa, 70Fb, 70Fc, and 70Fd in which the length of the radius R1 is a length of 0.5 L1 or more and less than L1, it is possible to reduce an influence on the output characteristics of the pressure detection element 10. Also, the length of the radius R1 of each of the imaginary circles 70Fa, 70Fb, 70Fc, and 70Fd is more preferably a length of 0.5 L1 or more and 0.85 L1 or less. When the radius R1 of each of the imaginary circles 70Fa, 70Fb, 70Fc, and 70Fd is 0.5 L1 or more and 0.85 L1 or less, the metal interconnects can be disposed near the outer periphery 241 of the frame 24, which is the outermost periphery of the semiconductor substrate 20. As a result, it is possible to reduce a variation in the stress distribution in the semiconductor substrate 20 due to the residual stress of each of the metal interconnects, while effectively supplying the power supply potential to the bridge circuit 30 or the like. Also, the region of each of the imaginary circles 70Fa, 70Fb, 70Fc, and 70Fd having the radius R1 of 0.5 L1 or more and 0.85 L1 or less includes the medium stress region D3 illustrated in FIG. 7. Thus, when the region of each of the imaginary circles 70Fa, 70Fb, 70Fc, and 70Fd having the radius R1 of 0.5 L1 or more and 0.85 L1 or less is set as the first region, it is possible to reduce a variation in the stress distribution in the semiconductor substrate 20. That is, it is possible to reduce an influence on the output characteristics of the pressure detection element 10.

As the first metal interconnects 32 are disposed at positions not overlapping the imaginary circles 70Fa, 70Fb, 70Fc, and 70Fd, the diffusion interconnects 33 connected to one of two piezoresistors 31 of the piezoresistors 31 facing each other via the center O of the diaphragm 23, and the diffusion interconnects 33 connected to the other of the two piezoresistors 31 extend obliquely relative to a direction passing through the two piezoresistors 31 in a plan view. Specifically, the diffusion interconnects 33a and 33b connected to the piezoresistor 31a, facing the piezoresistor 31c via the center O of the diaphragm 23, and the diffusion interconnects 33e and 33f connected to the piezoresistor 31c extend obliquely relative to a first direction passing through the piezoresistor 31a and the piezoresistor 31c in a plan view. The first direction is, for example, a direction parallel to the X-axis direction. The diffusion interconnects 33a and 33b, next to each other, do not cross each other. The diffusion interconnects 33e and 33f, next to each other, do not cross each other. Also, the diffusion interconnects 33c and 33d connected to the piezoresistor 31b, facing the piezoresistor 31d via the center O of the diaphragm 23, and the diffusion interconnects 33g and 33h connected to the piezoresistor 31d extend obliquely relative to a second direction passing through the piezoresistor 31b and the piezoresistor 31d in a plan view. The second direction is, for example, a direction parallel to the Y-axis direction. The diffusion interconnects 33c and 33d do not cross each other. The diffusion interconnects 33g and 33h do not cross each other.

In the semiconductor substrate 20, by disposing the first metal interconnects 32 in the remaining region excluding the imaginary circles 70Fa, 70Fb, 70Fc, and 70Fd having the radius R1 of a length in any of the above ranges, it is possible to reduce a variation in the stress distribution in the semiconductor substrate 20 due to the residual stress in the metal interconnects, such as the first metal interconnects 32 and the like. This can also reduce the difference between the stresses applied to the piezoresistors 31. As a result, it is possible to reduce an influence on the output characteristics of the pressure detection element 10 at the initial time. That is, it is possible to improve the pressure detection accuracy.

Also, the second metal interconnects 52a and 52b, the third metal interconnects 53a and 53b, the fourth metal interconnects 54a and 54b, the fifth metal interconnects 55, and the sixth metal interconnects 56a and 56b are not disposed in the first region. That is, these metal interconnects are disposed in the remaining region excluding the imaginary circles 70Fa, 70Fb, 70Fc, and 70Fd in the semiconductor substrate 20. Thus, it is possible to reduce a variation in the stress distribution in the semiconductor substrate 20 due to the residual stresses in the metal interconnects. This can also reduce the difference between the stresses applied to the piezoresistors 31. As a result, it is possible to reduce an influence on the output characteristics of the pressure detection element 10 at the initial time. That is, it is possible to improve the pressure detection accuracy.

### <Modified Example>

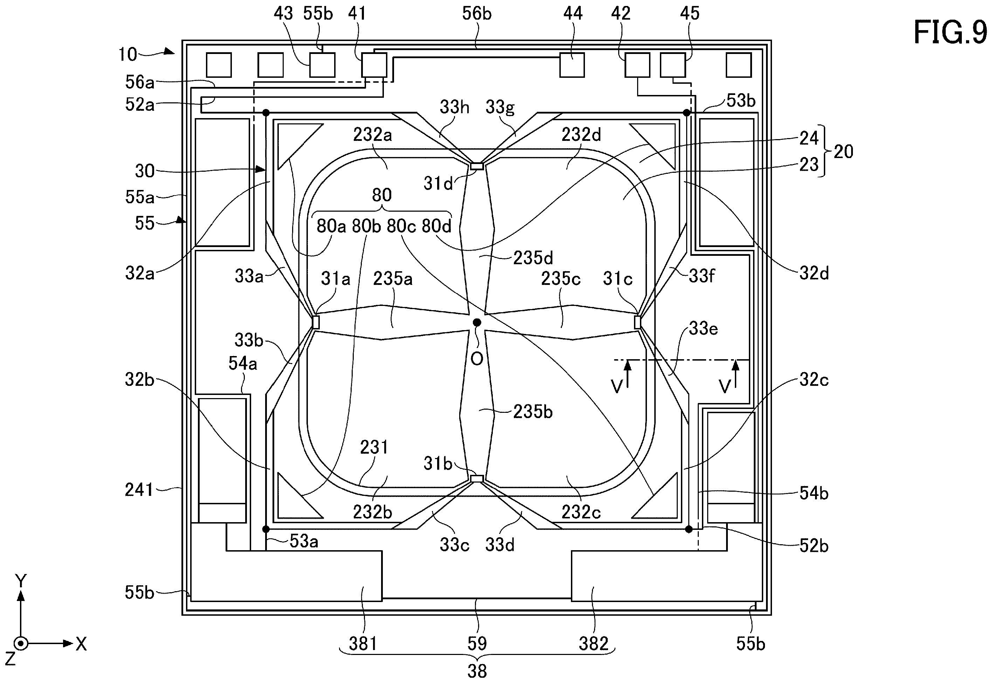

Next, a pressure detection element 10A according to a Modified Example of the embodiment will be described with reference to FIG. 9. FIG. 9 is a plan view schematically illustrating an example of a plane of the pressure detection element 10A according to the Modified Example. In the Modified Example, the same components as those in the embodiment are denoted by the same symbols, and description thereof will be omitted accordingly.

As illustrated in FIG. 9, the pressure detection element 10A further includes a plurality of thin metal films 80a, 80b, 80c, and 80d, which are formed of a metal material, such as Al or the like. The number of thin metal films 80a, 80b, 80c, and 80d illustrated in FIG. 9 is four, which is by no means a limitation. When the thin metal films 80a, 80b, 80c, and 80d are described without distinction, these are referred to as "thin metal films 80", hereinafter.

The thin metal films 80 have a triangular shape in a plan view. However, the shape of the thin metal films 80 in a plan view is not limited to this. For example, the shape of the thin metal films 80 in a plan view may be a circle, an ellipse, or a rectangle, or may be a polygon other than a triangle or a rectangle.

The metal thin films 80 are disposed in the frame 24 of the semiconductor substrate 20. For example, the metal thin films 80 are disposed in the very low stress regions D4 illustrated in FIG. 7. The metal thin films 80 are preferably disposed near the first metal interconnects 32. In the example illustrated in FIG. 9, the metal thin film 80a is disposed near the first metal interconnect 32a. The metal thin film 80b is disposed near the first metal interconnect 32b. The metal thin film 80c is disposed near the first metal interconnect 32c. The metal thin film 80d is disposed near the first metal interconnect 32d.

When the metal thin films 80 are disposed in the frame 24 of the semiconductor substrate 20, a variation in the stress distribution in the semiconductor substrate 20 is reduced. For example, when the metal interconnects are disposed in the medium stress regions D3 illustrated in FIG. 7, there is a possibility that a variation in the stress distribution due to the residual stress of the metal interconnects will not be reduced sufficiently. Therefore, by disposing the metal thin films 80 in the very low stress regions D4 illustrated in FIG. 7, relatively low residual stresses due to the metal thin films 80 are caused to occur isotropically. As a result, the difference between the stresses applied to the piezoresistors 31 can be reduced. This can reduce an influence on the output characteristics of the pressure detection element 10 at the initial time. That is, it is possible to improve the pressure detection accuracy. Especially, the very low stress regions D4 are regions where the generated stress is relatively low, and are suitable as regions where metal materials, such as the metal thin films 80 or the like, are disposed to reduce a variation in the stress distribution in the semiconductor substrate 20.

### <Examples>

Next, the pressure detection element 10 according to the embodiment will be described in more detail by way of examples. However, the scope of the present invention is not limited to the examples.

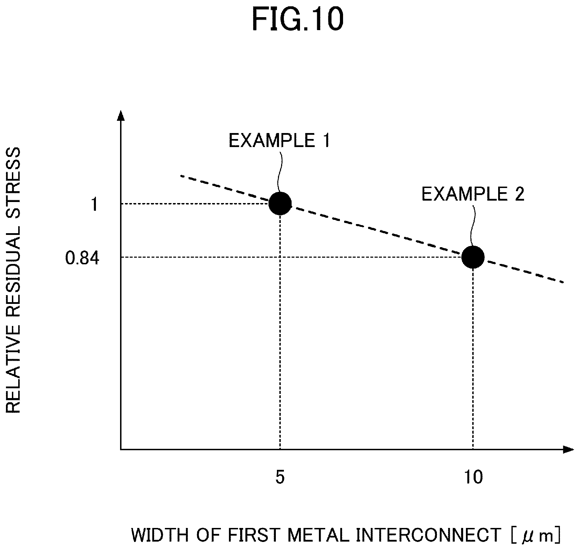

A relationship of the width of the first metal interconnects 32, included in the pressure detection element 10, relative to the total amount of the residual stress generated in the semiconductor substrate 20 (hereinafter referred to simply as a "residual stress") will be described. FIG. 10 is a graph illustrating an example of the relationship between the width of the first metal interconnects 32 and the residual stress. Specifically, FIG. 10 indicates a relative residual stress in the other Example (Example 2) with the residual stress in Example 1, in which the width of the first metal interconnects 32 is 5 micrometers (µm), being regarded as "1" (hereinafter this relative residual stress will be referred to simply as a "relative residual stress"). Note that a value of a pressure at the initial time obtained through simulation by changing the width of the first metal interconnects 32 is assumed to be a value of the residual stress. The vertical axis of FIG. 10 indicates the relative residual stress, and the horizontal axis of FIG. 10 indicates the width of the first metal interconnects 32. As described above, the width of the first metal interconnects 32 in Example 1 is 5 µm. The width of the first metal interconnects 32 in Example 2 is 10 µm.

As illustrated in FIG. 10, the simulation demonstrated that the residual stress decreased by increasing the width of the first metal interconnects 32. One of the presumable reasons for this is that a portion of the first metal interconnects 32 is disposed in the very low stress regions D4 in FIG. 7. Specifically, the relative residual stress in Example 2 was 0.84. That is, by increasing the width of the first metal interconnects 32 from 5 µm to 10 µm, the residual stress was decreased by about 16%. Also, by increasing the width of the first metal interconnects 32, the residual stress can be reduced, and the electrical resistance of the first metal interconnects 32 can be reduced. On the other hand, the relative residual stress of Reference Example 10R illustrated in FIGS. 6 and 7 was 2.75. That is, the residual stress of Reference Example 10R was 2.75 times the residual stress of Example 1. Because the residual stress decreases as the width of the first metal interconnects 32 increases, it is expected that the width of the first metal interconnects 32 will be the largest among the metal interconnects included in the pressure detection element 10. That is, the width of the first metal interconnects 32 is expected to be larger than the widths of the second metal interconnects 52 to the sixth metal interconnects 56. By connecting the metal thin films 80 to the first metal interconnects 32 having a relatively large width, it is possible to reduce the residual stress of the semiconductor substrate 20, and improve the pressure detection accuracy.

Although the embodiments of the present invention have been described above in detail, the present invention is not limited to the above-described embodiments, and various modifications and substitutions can be performed to the above-described embodiments without departing from the scope of the present invention.

The embodiments of the present disclosure are, for example, as follows.
<1> A pressure detection element, including:
   a semiconductor substrate that includes a diaphragm and a frame enclosing the diaphragm in a plan view; and
   a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect, in which
   the first metal interconnect is disposed in a remaining region excluding a first region in the semiconductor substrate, and
   the first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.
<2> The pressure detection element according to <1>, further including:
   a power supply potential terminal configured to supply a power supply potential to the bridge circuit;
   a first reference potential terminal configured to supply a first reference potential to the bridge circuit; and
   a second metal interconnect configured to electrically connect the bridge circuit to the power supply potential terminal or the first reference potential terminal, in which
   the second metal interconnect is disposed in the remaining region excluding the first region in the semiconductor substrate.
<3> The pressure detection element according to <2>, further including:
   an amplifier configured to amplify a pressure detection signal output from the bridge circuit;
   a third metal interconnect configured to electrically connect the bridge circuit to the amplifier;
   an output terminal configured to output an amplified signal output from the amplifier; and
   a fourth metal interconnect configured to electrically connect the amplifier to the output terminal, in which
   the third metal interconnect and the fourth metal interconnect are disposed in the remaining region excluding the first region in the semiconductor substrate.
<4> The pressure detection element according to <3>, further including:
   a second reference potential terminal configured to supply a second reference potential to the amplifier; and
   a fifth metal interconnect configured to electrically connect the second reference potential terminal to the amplifier, in which
   the fifth metal interconnect is disposed in the remaining region excluding the first region in the semiconductor substrate.
<5> The pressure detection element according to <4>, in which
   the power supply potential is supplied from the power supply potential terminal to the amplifier,
   the pressure detection element further includes a sixth metal interconnect that is disposed between the power supply potential terminal and the amplifier, and
   the sixth metal interconnect is disposed in the remaining region excluding the first region in the semiconductor substrate.
<6> The pressure detection element according to <5>, in which
   a width of the first metal interconnect is larger than a width of the second metal interconnect, a width of the third metal interconnect, a width of the fourth metal interconnect, a width of the fifth metal interconnect, and a width of the sixth metal interconnect.
<7> The pressure detection element according to any one of <1> to <6>, in which
   a plurality of diffusion interconnects, each being the diffusion interconnect, are provided at positions that are apart from each other, and
   the diffusion interconnects connected to one piezoresistor of two piezoresistors of the piezoresistors facing each other via a center of the diaphragm, and the diffusion interconnects connected to another piezoresistor of the two piezoresistors extend obliquely relative to a direction passing through the two piezoresistors in the plan view.
<8> The pressure detection element according to <7>, in which
   a width of each of the diffusion interconnects increases from an end closer to a corresponding piezoresistor toward an end closer to the first metal interconnect.
<9> The pressure detection element according to any one of <1> to <8>, further including:
   a plurality of metal thin films that are disposed in the frame.
<10> A pressure sensor, including:
   a pressure detection element;
   a flow path of a fluid, the flow path being continuous with the pressure detection element; and
   a meter configured to obtain a pressure detection signal output from the pressure detection element in accordance with a pressure received from the fluid, thereby measuring the pressure, in which
   the pressure detection element includes
      a semiconductor substrate that includes a diaphragm and a frame enclosing the diaphragm in a plan view, and
      a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect,
   the first metal interconnect is disposed in a remaining region excluding a first region in the semiconductor substrate, and
   the first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.

### REFERENCE SIGNS LIST

1 ... Pressure sensor, 2 ... Meter, 3 ... Substrate, 4 ... Cover, 10,10A ... Pressure detection element, 20 ... Semiconductor substrate, 23 ... Diaphragm, 24 ... Frame, 30 ... Bridge circuit, 31 ... Piezoresistor, 32 ... First metal interconnects, 33 ... Diffusion interconnect, 38 ... Amplifier, 41 ... Power supply potential terminal, 42 ... First reference potential terminal, 43 ... Second reference potential terminal, 44 ... First output terminal, 45 ... Second output terminal, 52a, 52b ... Second metal interconnects, 53a, 53b ... Third metal interconnects, 54a, 54b ... Fourth metal interconnects, 55 ... Fifth metal interconnects, 56a, 56b ... Sixth metal interconnects, 80 ... Metal thin films

## Claims

1. A pressure detection element, comprising:
a semiconductor substrate that includes a diaphragm and a frame enclosing the diaphragm in a plan view; and
a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect, wherein
the first metal interconnect is disposed in a remaining region excluding a first region in the semiconductor substrate, and
the first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.

2. The pressure detection element according to claim 1, further comprising:
a power supply potential terminal configured to supply a power supply potential to the bridge circuit;
a first reference potential terminal configured to supply a first reference potential to the bridge circuit; and
a second metal interconnect configured to electrically connect the bridge circuit to the power supply potential terminal or the first reference potential terminal, wherein
the second metal interconnect is disposed in the remaining region excluding the first region in the semiconductor substrate.

3. The pressure detection element according to claim 2, further comprising:
an amplifier configured to amplify a pressure detection signal output from the bridge circuit;
a third metal interconnect configured to electrically connect the bridge circuit to the amplifier;
an output terminal configured to output an amplified signal output from the amplifier; and
a fourth metal interconnect configured to electrically connect the amplifier to the output terminal, wherein
the third metal interconnect and the fourth metal interconnect are disposed in the remaining region excluding the first region in the semiconductor substrate.

4. The pressure detection element according to claim 3, further comprising:
a second reference potential terminal configured to supply a second reference potential to the amplifier; and
a fifth metal interconnect configured to electrically connect the second reference potential terminal to the amplifier, wherein
the fifth metal interconnect is disposed in the remaining region excluding the first region in the semiconductor substrate.

5. The pressure detection element according to claim 4, wherein
the power supply potential is supplied from the power supply potential terminal to the amplifier,
the pressure detection element further includes a sixth metal interconnect that is disposed between the power supply potential terminal and the amplifier, and
the sixth metal interconnect is disposed in the remaining region excluding the first region in the semiconductor substrate.

6. The pressure detection element according to claim 5, wherein
a width of the first metal interconnect is larger than a width of the second metal interconnect, a width of the third metal interconnect, a width of the fourth metal interconnect, a width of the fifth metal interconnect, and a width of the sixth metal interconnect.

7. The pressure detection element according to claim 1 or 2, wherein
a plurality of diffusion interconnects, each being the diffusion interconnect, are provided at positions that are apart from each other, and
the diffusion interconnects connected to one piezoresistor of two piezoresistors of the piezoresistors facing each other via a center of the diaphragm, and the diffusion interconnects connected to another piezoresistor of the two piezoresistors extend obliquely relative to a direction passing through the two piezoresistors in the plan view.

8. The pressure detection element according to claim 7, wherein
a width of each of the diffusion interconnects increases from an end closer to a corresponding piezoresistor toward an end closer to the first metal interconnect.

9. The pressure detection element according to claim 1 or 2, further comprising:
a plurality of metal thin films that are disposed in the frame.

10. A pressure sensor, comprising:
a pressure detection element;
a flow path of a fluid, the flow path being continuous with the pressure detection element; and
a meter configured to obtain a pressure detection signal output from the pressure detection element in accordance with a pressure received from the fluid, thereby measuring the pressure, wherein
the pressure detection element includes
a semiconductor substrate that includes a diaphragm and a frame enclosing the diaphragm in a plan view, and
a bridge circuit that includes a plurality of piezoresistors disposed over the diaphragm, a first metal interconnect configured to electrically connect adjacent piezoresistors of the plurality of piezoresistors, and a diffusion interconnect disposed between each of the plurality of piezoresistors and the first metal interconnect,
the first metal interconnect is disposed in a remaining region excluding a first region in the semiconductor substrate, and
the first region is a region of a plurality of imaginary circles having a radius of a length that is 0.5 L1 or more and less than L1 from a center of each of the plurality of piezoresistors, where L1 denotes a shortest distance between each of the plurality of piezoresistors and an outer periphery of the frame in the plan view.
